# NEUE EUROPÄISCHE PATENTSCHRIFT

(11) **EP 0 847 902 B2**
(45) Veröffentlichungstag und Bekanntmachung des Hinweises auf die Entscheidung über den Einspruch: **14.10.2009**
(45) Hinweis auf die Patenterteilung: 09.04.2003
(21) Anmeldenummer: 97122089.2
(22) Anmeldetag: 15.12.1997
(51) Int. Cl.: B60R 21/16

(54) **Luftsack für einen Seitenairbag**
Cushion for a lateral airbag device
Coussin pour airbag latéral

(30) Priorität: 13.12.1996 DE 19652019
(43) Veröffentlichungstag der Anmeldung: 17.06.1998
(73) Patentinhaber: TAKATA-PETRI (Ulm) GmbH, 89081 Ulm (DE)
(72) Erfinder: Wittmann, Robert, 85764 Oberschleissheim (DE); Müller, Frank, 71573 Allmersbach im Tal (DE); Niederkorn, Serge, 89075 Ulm (LU); Albrecht, Thomas, 87784 Westerheim (DE); Raddatz, Armin, 89179 Beimerstetten (DE); Früh, Hans-Jürgen, 89188 Merklingen (DE)
(74) Vertreter: Maikowski, Michael

(56) Entgegenhaltungen:
- EP-A- 0 653 335
- WO-A-97/01461
- DE-A- 4 329 275
- DE-C- 19 529 829
- DE-U- 9 405 143
- DE-U- 29 517 372
- DE-U- 29 601 497
- GB-A- 2 299 061
- US-A- 4 966 388

## Beschreibung

Die vorliegende Erfindung betrifft einen Luftsack für eine Seitenairbag nach dem Oberbegriff des Anspruchs 1.

Ein derartiger Luftsack ist aus der GB-A-2 299 061 bekannt. Dieser Luftsack wird zwischen dem Torso eines Fahrzeuginsassen und der Seite des Fahrzeugs angeordnet. Bei dieser Luftsackanordnung steht ein erster Luftsack über Strömungskanäle mit einem zweiten Luftsack in Verbindung, der an der Oberseite des ersten Luftsacks angeordnet ist. Der zweite Luftsack wird aufgebläht, nachdem der erste Luftsack gefüllt worden ist, wobei der zweite Luftsack als Kopfschutz für den Fahrzeuginsassen dient.

Es ist die Aufgabe der Erfindung, einen Luftsack der eingangs genannten Art zu schaffen, der ein verbessertes Entfaltungsverhalten und eine erhöhte Formstabilität aufweist.

Die Lösung dieser Aufgabe erfolgt durch die Merkmale des Anspruchs 1.

Die erfindungsgemäß vorgesehene Luftleitkammer, die auf verschiedene Weise ausgebildet werden kann, bewirkt beim Zünden des Gasgenerators ein schnelles Aufrichten des länglichen Luftsackes, da sich die entstehende Druckwelle in Richtung der vorgesehenen Kammer ausbreiten kann. Auch bei noch nicht vollständig entfaltetem Luftsack besitzt dieser eine hohe Formstabilität, da die Luft an dem offenen Ende in die Luftleitkammer eintritt und sich in Längsrichtung ausbreitet.

Im Gegensatz zu den bekannten Seiten-Luftsäcken, die eine untere Thoraxkammer und eine obere Kopfkammer aufweisen, neigt der erfindungsgemäße Luftsack nicht dazu, im Übergangsbereich zwischen diesen beiden Kammern abzuknicken bzw. sprungartig zu expandieren. Mit anderen Worten weist der erfindungsgemäße Luftsack eine geringere Aggressivität auf. Da der Luftsack einen Kopfbereich und einen Thoraxbereich aufweist, läßt sich der Luftsack an das unterschiedliche Aufprallverhalten des Thorax und des Kopfes eines Fahrzeuginsassen anpassen, wobei jedoch durch die Luftleitkammer nach wie vor sichergestellt ist, daß sich der Luftsack schnell und gleichmäßig entfaltet und formstabil bleibt.

Vorteilhafte Ausführungsformen der Erfindung sind in der Beschreibung, den Zeichnungen und den Unteransprüchen beschrieben.

Die Luftleitkammer kann je nach Anwendungsfall an ihrem oberstromigen Ende, d.h. an ihrem vom Gasgenerator entfernten Ende, offen oder geschlossen sein, wobei sich im Falle einer geschlossenen Luftleitkammer ein besonders rasches Entfalten des Luftsackes gibt. Besonders vorteilhaft ist es, wenn zwei geschlossene Luftleitkammern an der inneren Mantelfläche des Luftsackes beabstandet sind, da der Luftsack in diesem Fall sehr rasch seine Endform einnimmt, auch wenn das Innenvolumen des Luftsackes noch nicht vollständig gefüllt ist.

Eine besonders einfache Herstellung der erfindungsgemäßen Luftleitkammer ist gegeben, wenn zwei Bereiche des Luftsacks durch eine Längsnaht verbunden werden, da sich hierdurch auf einfache Weise in Längsrichtung erstreckende Luftleitkammern bilden lassen. Durch diese Maßnahme kann gleichzeitig das Volumen insbesondere im Kopfbereich reduziert werden, wodurch sich eine geringere Aufblaszeit ergibt.

Die Luftleitkammern sind durch eine zusätzliche Kammerwand gebildet, die in den Luftsack eingesetzt bzw. eingenäht ist.

Der Luftsackweise einen im wesentlichen nierenförmigen Längsschnitt auf, wobei vorzugsweise die Öffnung des Luftsacks, durch die das Gas in diesen einströmt, in einem unteren Endbereich des Luftsacks angeordnet ist. Hierdurch ergibt sich in Verbindung mit der erfindungsgemäßen Luftleitkammer ein besonders positives Verhalten beim Entfalten und beim Aufprall des Fahr zeuginsassen.

Auch bei dem erfindungsgemäßen Luftsack kann es vorteilhaft sein, eine Aufteilung in eine Thoraxkammer und eine Kopfkammer vorzusehen. Hierdurch ist gewährleistet, daß sich zunächst die Thoraxkammer mit Luft füllt, daß jedoch gleichzeitig die Kopfkammer ihre Endform einnimmt.

Nachfolgend wird die vorliegende Erfindung rein beispielhaft anhand vorteilhafter Ausführungsformen und unter Bezugnahme auf die beigefügten Zeichnungen beschrieben. Es zeigen:
- Fig. 1: eine schematische Längsschnittansicht eines erfindungsgemäßen Luftsacks;
- Fig. 2: eine Querschnittansicht entlang der Linie II-II von Fig. 1;
- Fig. 3: eine schematische Längsschnittansicht einer weiteren nicht beanspruchten Ausführungsform;
- Fig. 4 und 5: eine Querschnittansicht durch verschiedene Ausführungsformen eines Luftsacks.

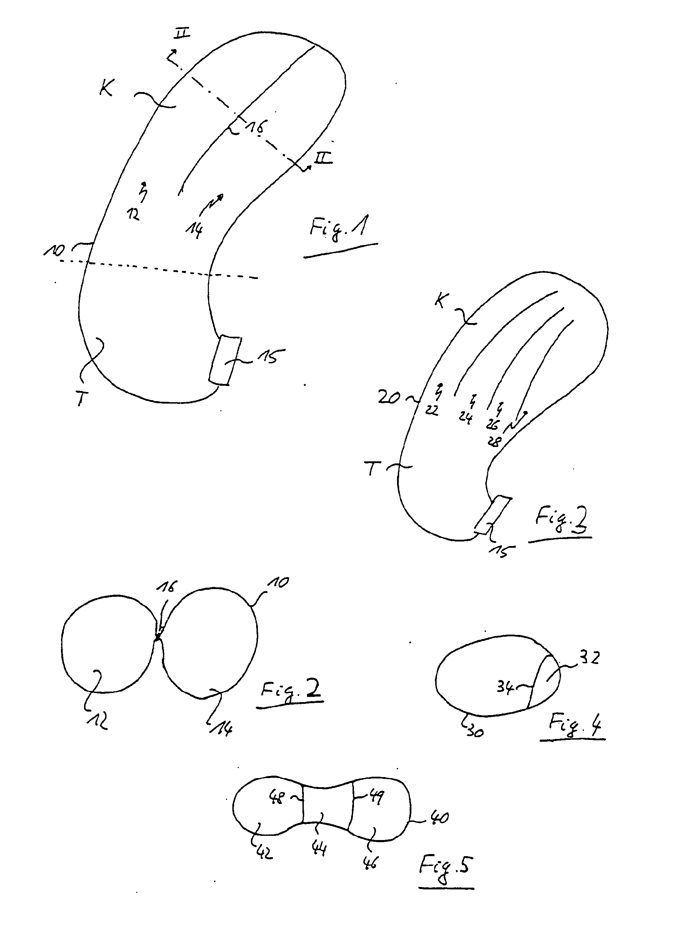

In Fig. 1 ist ein Luftsack 10 für einen Seitenairbag im Längsschnitt dargestellt, der zum Schutz des Thorax-Kopfbereiches eines Fahrzeuginsassen dient. Im Falle eines Seitenaufpralls trifft der Fahrzeuginsasse mit seinem Thoraxbereich auf denjenigen Bereich T des Luftsacks 10 auf, der unterhalb der gestrichelten Linie angeordnet ist. Der Kopf des Fahrzeuginsassen trifft wenig später auf den oberhalb dieser Linie befindlichen Bereich K auf.

Wie Fig. 1 zeigt, weist der Luftsack 10 eine länglich Form auf, die im Längsschnitt nierenförmig erscheint. Das Bezugszeichen 15 bezeichnet schematisch ein Airbaggehäuse, das auch den erforderlichen Gasgenerator aufnimmt.

Der Luftsack 10 weist zwei Luftleitkammern 12, 14 auf, die parallel zueinander verlaufen und sich jeweils in Längsrichtung des Luftsacks 10 erstrecken. An ihrem oberen bzw. oberstromigen Ende sind beide Luftleitkammern geschlossen, während das untere bzw. unterstromige Ende der Luftleitkammern offen ausgebildet ist. Bei dem in Fig. 1 dargestellten Ausführungsbeispiel sind die beiden Luftleitkammern 12, 14 durch eine Längsnaht 16 gebildet, welche - ähnlich wie bei einer Luftmatratze - zwei gegenüberliegende Bereiche des Luftsacks miteinander verbindet.

Fig. 2 zeigt einen Querschnitt durch den Luftsack von Fig. 1 entlang der Linie II-II. Wie gut zu erkennen ist, sind durch die Längsnaht 16 die beiden Kammern 12 und 14 mit im wesentlichen gleich großem Querschnitt gebildet.

Fig. 3 zeigt eine weitere (nicht beanspruchte) Ausführungsform eines Luftsacks 20, bei dem insgesamt vier in Längsrichtung verlaufende Luftleitkammern 22, 24, 26 und 28 ausgebildet sind. Wie zu erkennen ist, sind diese Luftleitkammern auch an ihrem oberen Ende offen ausgebildet, so daß im oberen Bereich des Luftsackes 20 ein Druckausgleich stattfinden kann.

Fig. 4 zeigt eine Ausführungsform eines erfindungsgemäßen Luftsackes 30, bei dem zwei Luftleitkammern durch Einsetzen einer zusätzlichen Kammerwand in das Innere des Luftsackes 30 gebildet sind.

Schließlich ist in Fig. 5 eine Querschnittansicht durch einen weiteren nicht beanspruchten Luftsack 40 gezeigt, der drei Luftleitkammern 42, 44 und 46 besitzt, die durch zwei eingenähte Kammerwände 48 und 49 gebildet sind.

Es ist verständlich, daß verschiedene der oben beschriebenen Ausführungsformen miteinander kombiniert werden können, um optimierte Ergebnisse zu erzielen. Auch kann es vorteilhaft sein, den Luftsack durch zusätzliche Abnähungen oder Trennwände in eine Thoraxkammer und eine Kopfkammer zu unterteilen.

## Patentansprüche

1. Luftsack für einen Seitenairbag zum Schutz des Thorax-Kopf-Bereiches eines Fahrzeuginsassen, wobei der Luftsack (10) einen Kopfbereich (K) und einen Thoraxbereich (T) sowie mehrere Luftleitkammern und im aufgeblähten Zustand eine im wesentlichen längliche Form aufweist, **dadurch gekennzeichnet, dass** insgesamt zwei parallel verlaufende Luftleitkammern (12, 14) , vorgesehen sind, die sich in Längsrichtung des Luftsacks (10) erstrecken, wobei die beiden Luftleitkammern (12,14) außerhalb des Thoraxbereiches (T) des Luftsacks (10) angeordnet sind und sich in den Kopfbereich (K) des Luftsackes (10) erstrecken, die Luftleitkammern durch eine zusätzliche Kammerwand (34) gebildet sind, die in den Luftsack (30) eingesetzt ist oder durch eine Längsnaht (16) gebildet sind, die zwei Bereiche des Luftsacks verbindet und der Luftsack einen im wesentlichen nierenförmigen Längsschnitt aufweist.

2. Luftsack nach Anspruch 1,
**dadurch gekennzeichnet, daß**
die Luftleitkammern (12, 14) an ihrem oberen Ende geschlossen sind.

3. Luftsack nach Anspruch 1,
**dadurch gekennzeichnet, daß**
die Luftleitkammern an ihrem oberen Ende offen sind.

4. Luftsack nach zumindest einem der vorstehenden Ansprüche,
**dadurch gekennzeichnet, daß**
die Öffnung für einen Gasgenerator in einem unteren Endbereich des Luftsacks angeordnet ist.

## Claims

1. Air cushion for a side airbag for protecting the chest/head region of a vehicle occupant, the air cushion (10) having a head region (K) and a chest region (T) and a plurality of air-guiding chambers and, when inflated, having an essentially oblong form, **characterized in that** a total of two air-guiding chambers (12, 14) which run parallel and extend in the longitudinal direction of the air cushion (10) are provided, the two air-guiding chambers (12, 14) being arranged outside the chest region (T) of the air cushion (10) and extending into the head region (K) of the air cushion (10), the air-guiding chambers being formed by an additional chamber wall (34) which is inserted into the air cushion (30), or being formed by a longitudinal seam (16) which connects two regions of the air cushion, and the air cushion having an essentially kidney-shaped longitudinal section.

2. Air cushion according to Claim 1, **characterized in that** the air-guiding chambers (12, 14) are closed at their upper end.

3. Air cushion according to Claim 1, **characterized in that** the air-guiding chambers are open at their upper end.

4. Air cushion according to at least one of the preceding claims, **characterized in that** the opening for a gas generator is arranged in a lower end region of the air cushion.

## Revendications

1. Coussin pour un airbag latéral afin de protéger la zone thorax-tête d'un passager de véhicule, le coussin (10) comprenant une zone de tête (K) et une zone de thorax (T) ainsi que plusieurs chambres de guidage d'air et présentant dans l'état gonflé une forme sensiblement allongée, **caractérisé en ce qu'**il est prévu au total deux chambres de guidage d'air parallèles (12, 14) qui s'étendent en direction longitudinale du coussin (10), les deux chambres de guidage d'air (12, 14) étant agencées à l'extérieur de la zone de thorax (T) du coussin (10) et s'étendant jusque dans la zone de tête (K) du coussin (10), les chambres de guidage d'air étant formées par une paroi de chambre supplémentaire (34) qui est mise en place dans le coussin (30), ou étant formées par une couture longitudinale (16) qui relie deux zones du coussin, et le coussin comprenant une coupe longitudinale sensiblement réniforme.

2. Coussin selon la revendication 1, **caractérisé en ce que** les chambres de guidage d'air (12, 14) sont fermées à leur extrémité supérieure.

3. Coussin selon la revendication 1, **caractérisé en ce que** les chambres de guidage d'air sont ouvertes à leur extrémité supérieure.

4. Coussin selon l'une au moins des revendications précédentes, **caractérisé en ce que** l'ouverture pour un générateur de gaz est prévue dans la zone d'extrémité inférieure du coussin.
